# EUROPÄISCHE PATENTSCHRIFT

(11) **EP 2 576 411 B1**
(45) Veröffentlichungstag und Bekanntmachung des Hinweises auf die Patenterteilung: **12.03.2014**
(21) Anmeldenummer: 11745786.1
(22) Anmeldetag: 18.08.2011
(51) Int. Cl.: B66C 7/04, B65G 41/00

(54) **VORRICHTUNG ZUM AUFHÄNGEN EINER SCHIENE, INSBESONDERE EINER SCHIENE EINES FLURFREIEN FÖRDERERS ODER EINES HEBEZEUGS**
DEVICE FOR SUSPENDING A RAIL, IN PARTICULAR A RAIL OF A FLOOR-FREE CONVEYOR OR A LIFTING APPARATUS
DISPOSITIF POUR SUSPENDRE UN RAIL, EN PARTICULIER UN RAIL D'UN TRANSPORTEUR OU D'UN APPAREIL DE LEVAGE N'ÉTANT PAS EN CONTACT AVEC LE SOL

(30) Priorität: 30.08.2010 DE 102010037229
(43) Veröffentlichungstag der Anmeldung: 10.04.2013
(73) Patentinhaber: Demag Cranes & Components GmbH, 58300 Wetter (DE)
(72) Erfinder: BHOSALE, Shrikant, Maharastra Pune-411046 (IN); UTTEKAR, Mahesh, Maharastra Pune-412114 (IN); KHADKE, Deepti, Maharastra Pune-411019 (IN); DESAI, Deepak, Maharastra Pune- 411014 (IN); SEAL, Akhoy, Maharastra Pune-411008 (IN); MÜLLER, Sven, 58339 Breckerfeld (DE)
(74) Vertreter: Moser & Götze
(86) Internationale Anmeldenummer: PCT/EP2011/064242
(87) Internationale Veröffentlichungsnummer: WO 2012/028470

(56) Entgegenhaltungen:
- CA-A- 226 988
- DE-A1-102005 040 421
- JP-B- 49 004 899
- KR-A- 20090 062 281
- US-A- 2 395 234
- US-A- 3 095 174

## Beschreibung

Die Erfindung betrifft eine Aufhängevorrichtung für eine Schiene, insbesondere eine Schiene eines flurfreien Förderers oder eines Hebezeugs, mit einem eine Gewindestange und mindestens ein hiermit verschraubtes Verbindungsteil umfassenden Zugelement und einem die Schraubverbindung zwischen der Gewindestange und dem Verbindungsteil gegen Lösen sichernden Sicherungselement.

Aus der deutschen Patentschrift DE 10 2005 040 421 B4 ist eine Aufhängung für eine Kranschiene an einem Tragwerk in Form einer Decke oder eines Deckenprofils bekannt. Entlang der Kranschiene ist ein Kran über Fahrwerke verfahrbar. Die Kranschiene ist über mehrere in Längsrichtung der Kranschiene voneinander beabstandete Aufhängungen an dem Tragwerk befestigt. Jede der Aufhängungen besteht im Wesentlichen aus einem oberen Anschlussteil mit einer ersten Gewindehülse, einer Gewindestange und einem unteren Anschlussteil mit einer zweiten Gewindehülse. Das obere Anschlussteil ist an dem Tragwerk befestigt und das untere Anschlussteil an der aufzuhängenden Schiene. Über die Gewindestange, die mit ihren gegenüberliegenden Enden in die erste Gewindehülse und zweite Gewindehülse eingeschraubt wird, wird das untere Anschlussteil an dem oberen Anschlussteil aufgehängt. Durch die Verwendung einer Gewindestange in Verbindung mit den Gewindehülsen kann die vertikale Länge der gesamten Aufhängung einfach an die örtlichen Gegebenheiten angepasst werden, um somit die Kranschiene in der gewünschten Ausrichtung aufzuhängen und die Last auf die Aufhängungen zu verteilen. Um die Verbindung zwischen der Gewindestange und dem unteren Anschlussteil sowie dem oberen Anschlussteil gegen ein Lösen der Verschraubung zu sichern, ist jeweils ein Federstecker vorgesehen, der ein Stiftteil und ein Federteil aufweist. Hierfür wird das Stiftteil durch eine durchgehende Langloch-Bohrung in der jeweiligen Gewindehülse und der eine durchgehende Langloch-Bohrung in der Gewindestange hindurch gesteckt, während das Federteil außen an der jeweiligen Gewindehülse anliegt. Das Stiftteil ist somit gegen ein Herausrutschen aus den Langloch-Bohrungen gesichert. Auch sind diese Aufhängungen pendelnd ausgelegt, da dies sicher stellt, dass sich die Kranschienen selbsttätig ausrichten, sich also in den Gleichgewichtszustand bringen, d.h. keine wesentliche Biegebelastung im Zugelement auftritt. Die pendelnde Aufhängung erfolgt über Kugelgelenklager.

Des Weiteren sind aus dem deutschen Gebrauchsmuster DE 299 14 578 U1 und aus der deutschen Offenlegungsschrift DE 101 31 183 A1 sogenannte Spannschlösser bekannt, die auch für die Aufhängung von Schienen von Einschienenhängebahnen im Bergbau zum Einsatz kommen. Diese Spannschlösser bestehen im Wesentlichen aus einer zentralen Spannschlossmutter und zwei seitlich hiermit verbundenen Spannösen. Die Spannösen bestehen jeweils aus einer Öse, um Haken, Bolzen oder Seile aufzunehmen, und einem an der Öse angeordneten Schaft mit einem Außengewinde. Die Spannschlossmutter ist entweder als langgestreckter Rahmen oder als Hülse ausgebildet, an deren sich gegenüber liegenden Enden Innengewinde in Form von Muttern angeordnet sind. In diese Muttern sind die Schäfte der Spannösen eingeschraubt. Die Außengewinde der Schäfte sind gegenläufig, so dass über eine Verdrehen der Spannschlossmutter relativ zu den beiden Spannösen, die Ösen der Spannösen aufeinander zu oder voneinander weg bewegt werden können. Auch ist bei einem der beiden Spannschlösser vorgesehen, dass die beiden Spannösen gegenüber der Spannschlossmutter blockierbar sind. Hierfür sind mehrere Nuten in den Schäften angeordnet, die jeweils in Längsrichtung der Schäfte verlaufen. An den Spannösen ist jeweils ein federnd vorgespannter Stift gelagert, der zum Blockieren des Spannschlosses aus einer zurück gezogenen Ruhestellung in eine Blockierstellung bewegbar ist, in der der Stift in eine der Nuten hinein ragt. Derartige Spannschlösser unterscheiden sich grundsätzlich vom Aufbau von den vorbeschriebenen Aufhängevorrichtungen, da diese keine zentrale Gewindestange aufweisen, sondern nur zwei Spannösen mit Gewindeschäften.

Im dem Patent US 3,095,174 A ist bereits eine weitere Aufhängevorrichtung für eine Schiene einer Einschienenhängebahn beschrieben. Auch dort kommen Gewindestangen als Zugelemente zum Einsatz, an deren Enden Muttern zur Einstellung der Aufhängehöhe der Schiene aufgeschraubt sind. Diese Muttern sind über eine radial von außen einschraubbare Gewindeschraube gegen Losdrehen gesichert. Hierbei stützt sich dann das vordere Ende der Gewindeschraube an den Gewindegängen der Zugstange ab. Die Gewindestange kann auch seitlich abgeflacht sein, um der Gewindeschraube eine flache Anlagefläche zu bieten. Eine im Bezug auf die Sicherung der Mutter über eine Gewindeschraube vergleichbare Aufhängevorrichtung ist auch in der Patentschrift JP 49 004899 B beschrieben.

Des Weiteren beziehen sich die ist aus den Schriften CA 226 988 A und US 2,395,234 A allgemein auf das Gebiet der Befestigungsmittel. Dort ist in Bezug auf eine Sicherung gewöhnlicher Muttern auf Gewindeschrauben beschrieben, federnde Bügel durch eine Bohrung in einer Mutter in eine Nut eines Gewindeschaftes der Gewindeschraube eingreifen zu lassen.

Der vorliegenden Erfindung liegt die Aufgabe zu Grunde, eine Aufhängevorrichtung für eine Schiene, insbesondere einer Fahrschiene eines flurfreien Förderers oder eines Hebezeugs, bereitzustellen, die eine vereinfachte und sichere Montage ermöglicht.

Diese Aufgabe wird durch eine Aufhängevorrichtung mit den Merkmalen des Anspruches 1 gelöst. Vorteilhafte Ausgestaltungen der Aufhängevorrichtung sind in den Unteransprüchen 2 bis 8 angegeben.

Erfindungsgemäß wird bei einer Aufhängevorrichtung für eine Schiene, insbesondere einer Schiene eines flurfreien Förderers oder eines Hebezeugs, mit einem eine Gewindestange und mindestens ein hiermit verschraubtes Verbindungsteil umfassenden Zugelement und einem die Schraubverbindung zwischen der Gewindestange und dem Verbindungsteil gegen Lösen sichernden Sicherungselement, eine vereinfachte und sichere Montage dadurch erreicht, dass das Sicherungselement im Einbauzustand mit einem Stiftteil in eine Nut eingreift, die in der Gewindestange angeordnet ist. Die Nut in der Gewindestange führt zu einer erheblichen Montageerleichterung, da das Sicherungselement nach einem fluchtenden Ausrichten der Nut gegenüber der Öffnung einfach eingesteckt werden kann, ohne eine Bohrung in der Gewindestange und/oder dem Verbindungsteil vornehmen zu müssen. Eine längenabhängige mechanische Bearbeitung bei der Montage entfällt. Die Nut führt nur zu einer geringen Querschnittsverminderung der Gewindestange und vermindert deren Festigkeit kaum.

Im Sinne der Erfindung ist unter einer Gewindestange ein Stab mit einem Außengewinde zu verstehen, der keine besonders ausgeformten Flächen oder Bereiche für Angriffe eines Werkzeugs aufweist, wie beispielsweise einen Sechskantkopf. Das Außengewinde ist zumindest im Bereich der gegenüberliegenden Enden der Gewindestange vorgesehen, verläuft aber in üblicher Weise über die gesamte Länge der Gewindestange. Auch hat das Außengewinde nur eine Steigungsrichtung. Da die Gewindestange derart einfach aufgebaut ist, eignet diese sich besonders gut für eine Verwendung in der Aufhängevorrichtung, da sich häufig erst vor Ort bei der Aufhängung der Schienen ergibt, wie lang die zu verwendende Gewindestange zu sein hat. Vor Ort kann dann eine Gewindestange einfach auf die erforderliche Länge gekürzt werden. Die Gewindestangen können somit vorteilhafter Weise in abgestuften Standardlängen hergestellt werden. Eine entsprechende einfache Längenanpassung kann bei Spannschlössern nicht erfolgen, da die Längen der Schäfte der Spannösen auf die Länge der Spannschlossmutter angepasst sind.

Eine sichere Wirkung und Abstützung des Sicherungselements wird dadurch erreicht, dass das Sicherungselement im Einbauzustand durch eine Öffnung in dem Verbindungsteil mit dem Stiftteil in die Nut eingreift.

In fertigungstechnischer Hinsicht als einfach erweist sich, dass die Nut in Längsrichtung der Gewindestange verläuft.

Ein Kürzen der Gewindestangen und auch eine Bevorratung der Gewindestangen wird dadurch erleichtert, dass die Nut in Längsrichtung der gesamten Gewindestange verläuft.

In bevorzugter Ausgestaltung ist vorgesehen, dass das Sicherungselement nach Art eines Doppelfedersteckers mit zwei gegenüberliegenden Schenkeln ausgebildet ist. Hierbei ist gegenüber einem handelsüblichen Doppelfederstecker das Stiftteil verkürzt, da es in dem Einbauzustand nur in die Nut eintauchen muss. Das Sicherungselement ist somit einfach herstellbar ausgebildet und die hülsenförmigen Verbindungsteile brauchen für die Verwendung des Doppelfedersteckers nur mit den Bohrungen versehen werden und müssen nicht zusätzlich aufwendig mechanisch bearbeitet werden.

Die Sicherung des Stiftteils in der Nut erfolgt über die Schenkel des Doppelfedersteckers, die im Einbauzustand des Sicherungselements das hülsenförmige Verbindungsteil aus Richtung des Stiftteils gesehen hintergreifen.

Besonders vorteilhaft ist vorgesehen, dass die Öffnung als Langloch ausgebildet ist, dessen Längserstreckung in Längsrichtung der Gewindestange ausgerichtet ist, und das Stiftteil derart u-förmig ausgebildet, dass eine von den Stiftschenkeln aufgespannte Ebene rechtwinklig zu einer von den Schenkeln des Sicherungselementes aufgespannte Ebene ausgerichtet ist und die Längsachse der Gewindestange beinhaltet. Mit anderen Worten ausgedrückt, ist das Stiftteil quer zu dessen Einsteckrichtung gesehen und quer zur Längsrichtung der Gewindestange gesehen u-förmig ausgebildet. Hierdurch wird verhindert, dass sich das Sicherungselement, insbesondere dessen Stiftteil, in der Öffnung und in der Nut verdrehen kann. Somit rutschen auch bei mechanischer Einwirkung von außen die Schenkel nicht von dem Gewindehülsenabschnitt ab.

In bevorzugter Ausgestaltung ist vorgesehen, dass das Zugelement neben der Gewindestange ein unteres Verbindungsteil und ein oberes Verbindungsteil umfasst.

Bei einer üblichen Verwendungsweise ist im Einbauzustand an dem unteren Verbindungsteil die Schiene aufgehängt und das obere Verbindungsteil an einem Tragelement befestigt.

Weitere Merkmale, Einzelheiten und Vorteile der Erfindung ergeben sich aus den Unteransprüchen und der nachfolgenden Beschreibung von Ausführungsbeispielen anhand der Zeichnung. Es zeigen:
Figur 1 eine perspektivische Ansicht eines Einträgerhängekrans,
Figur 2 einen vergrößerten Ausschnitt des Bereichs Z von Figur 1,
Figur 3 einen vergrößerten Ausschnitt von Figur 2 aus dem Bereich eines Sicherungselements nach Art eines Doppelfedersteckers,
Figur 4 eine Schnittansicht von Figur 3,
Figur 5 eine perspektivische Ansicht des Sicherungselements gemäß Figur 3,
Figur 6 eine Frontansicht des Sicherungselements gemäß Figur 5.

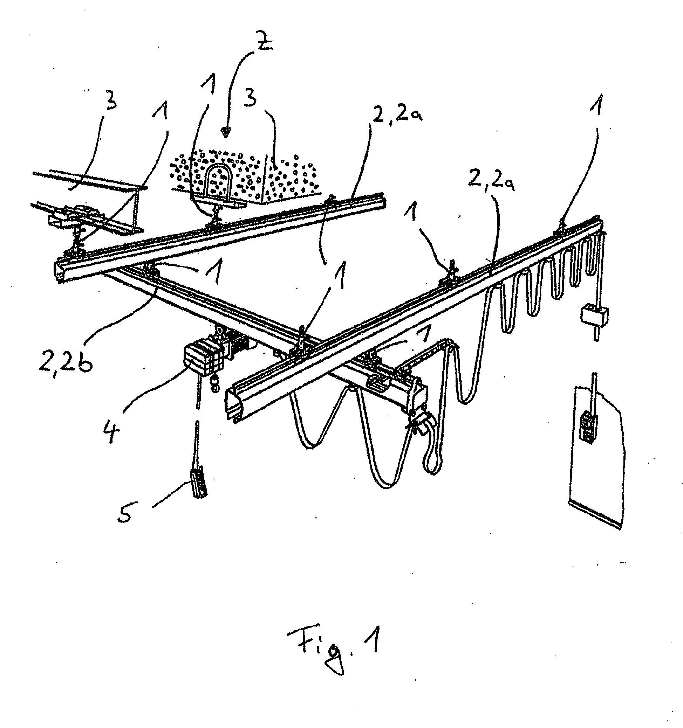

In der Figur 1 sind eine Vielzahl von Aufhängevorrichtungen 1 in Verbindung mit einem Einträgerhängekran gezeigt. Mittels der Aufhängevorrichtungen 1 sind im Wesentlichen horizontal verlaufende und nach unten offene c-förmig profilierte Schienen 2 an Tragelementen 3 oder weiteren Schienen 2 aufgehängt. Die Tragelemente 3 sind als Doppel-T-Träger ausgebildet. Da das vorliegende Ausführungsbeispiel einen Einträgerhängekran betrifft, sind zwei im Wesentlichen horizontal, parallel und mit Abstand zueinander verlaufende erste Schienen 2a vorgesehen, die als Fahrschienen des Einträgerhängekrans dienen und eine zweite Schiene 2b, die eine Kranschiene bildet, die im Wesentlichen quer zu den ersten Schienen 2a ausgerichtet und entlang der ersten Schienen 2a verfahrbar ist. Hierzu ist die zweite Schiene 2b über zwei Aufhängevorrichtungen 1 jeweils an einem nicht dargestellten und entlang der ersten Schienen 2a verfahrbaren Fahrwerk aufgehängt. An der zweiten Schiene 2b ist in üblicher Weise ein Hebezeug 4 wie ein Ketten- oder Seilzug aufgehängt und mit einem weiteren nicht dargestellten Fahrwerk entlang der zweiten Schiene 2b verfahrbar. Das Hebezeug 4 ist über einen an dem Hebezeug 4 aufgehängten Hängeschalter 5 steuerbar.

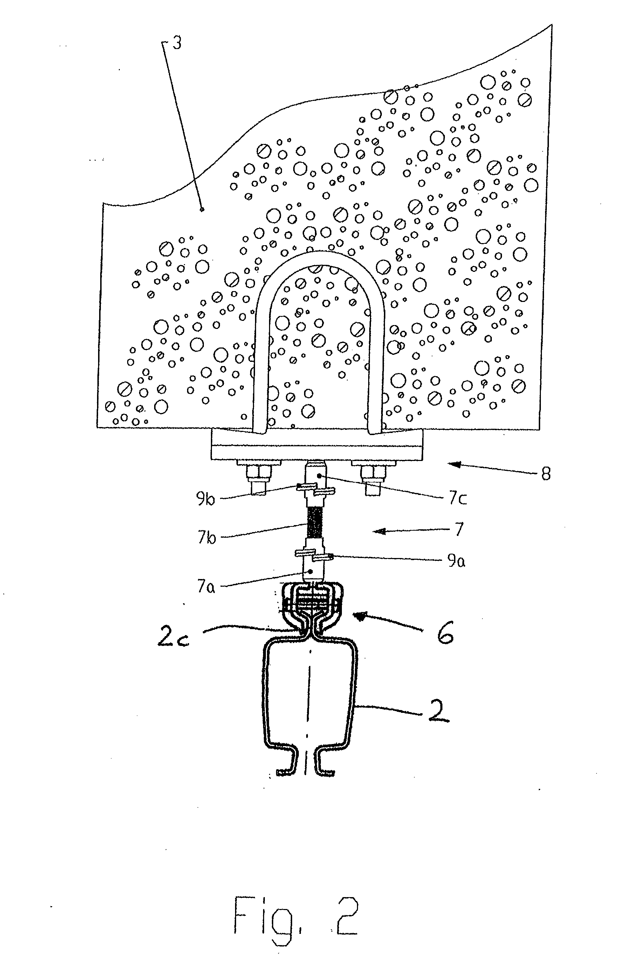

Die Figur 2 zeigt einen vergrößerten Ausschnitt eines Bereichs Z von Figur 1, der eine Aufhängevorrichtung 1 betrifft. Die Aufhängevorrichtung 1 besteht im Wesentlichen aus einem unteren Anschlussteil 6, einem Zugelement 7 und einem oberen Anschlussteil 8. Hierbei wird mittels des unteren Anschlussteils 6 die Schiene 2a an dem Zugelement 7 der Aufhängevorrichtung 1 aufgehängt. Über das obere Anschlussteil 8 erfolgt eine Befestigung des Zugelements 7 an einem Tragelement 3, das hier als Betondecke ausgebildet ist. Um die nach unten offene und C-förmige Schiene an beliebigen Stellen entlang ihrer Längsrichtung mit Aufhängevorrichtungen 1 versehen zu können, weist diese im oberen Bereich einen in Längsrichtung der Schiene 2a verlaufenden nach oben hervorstehenden Steg 2c auf, der sich von der Schiene 2a weg und somit nach oben v-förmig erweitert. Das untere Anschlussteil 6 ist klammerartig ausgebildet und umgreift den sich nach oben erweiternden Steg 2c. An dem dem Steg 2c gegenüber liegenden oberen Ende des unteren Anschlussteils 6 ist das Zugelement 7 befestigt. Diese Befestigung kann je nach den örtlichen Gegebenheiten und der Art der Verwendung der Schiene 2a starr oder pendelnd ausgebildet sein. Eine starre Verbindung kann beispielsweise über eineentsprechende Verschraubung erfolgen; eine pendelnde Verbindung kann über einen Kugelkopf im Bereich des Endes des Zugelements 7 und eine entsprechende Aufnahme im Bereich des unteren Anschlussteils 6 vorgesehen werden.

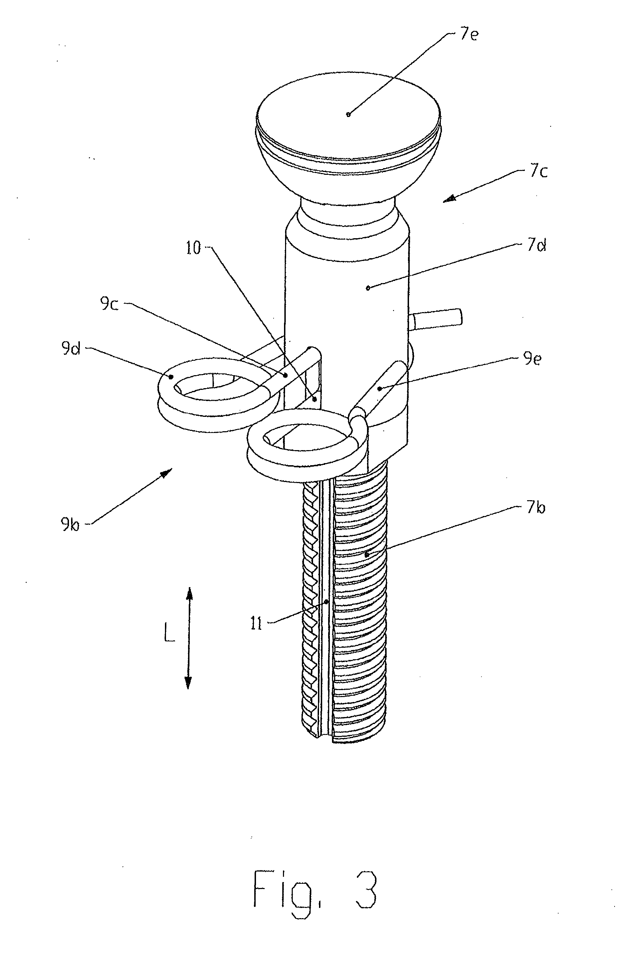

Das stangenförmige Zugelement 7 umfasst ein unteres Verbindungsteil 7a, eine Gewindestange 7b und ein oberes Verbindungsteil 7c. Die unteren und oberen Verbindungsteile 7a, 7c sind an ihren der Gewindestange 7b zugewandten Ende im Wesentlichen als Gewindehülsen 7d ausgebildet sowie an ihren gegenüberliegenden Enden im Falle einer starren Befestigung beispielsweise mit einem Außengewinde oder für die gelenkige Anbindung an das untere Anschlussteil 6 bzw. obere Anschlussteil 8 mit einem Halbkugelkopfteil 7e (siehe Figur 3) versehen. Die Ausgestaltung des Zugelementes 7 mit einer Gewindestange 7b hat den Vorteil, dass je nach örtlichen Gegebenheiten die Gewindestangen 7b in der gewünschten Aufhängelänge gekürzt werden können und anschließend durch Aufschrauben des unteren Verbindungsteils 7a und des oberen Verbindungsteils 7c zu dem Zugelement 7 in der erforderlichen Länge zusammengebaut werden. Um die Schraubverbindung zwischen dem unteren Verbindungsteil 7a und der Gewindestange 7b sowie dem oberen Verbindungsteil 7c und der Gewindestange 7b zu sichern, ist ein oberes Sicherungselement 9b und ein unteres Sicherungselement 9a vorgesehen. Das untere und obere Sicherungselement 9a, 9b sind jeweils nach Art eines Doppelfedersteckers ausgebildet.

In der Figur 3 ist eine vergrößerte Ansicht eines oberen Verbindungsteils 7c gezeigt, das sich mit einer Gewindestange 7b im Eingriff befindet und über ein oberes Sicherungselement 9b gesichert ist. Das obere Verbindungsteil 7c ist in einen unteren Gewindehülsenabschnitt 7d und einen oberen Halbkugelkopfteil 7e aufgeteilt. Der Halbkugelkopfteil 7e und der Gewindehülsenabschnitt 7d sind einteilig ausgebildet und die gewölbte Oberfläche des Halbkugelkopfteils 7e ist dem Gewindehülsenabschnitt 7d zugewandt. Der Halbkugelkopfteil 7e ist Teil eines Kugelgelenklagers, dessen komplementär ausgebildete Aufnahmeschale in dem oberen Anschlussteil 8 der Aufhängevorrichtung 1 angeordnet ist. Der Gewindehülsenabschnitt 7d ist mit einem Innengewinde versehen, in das das obere Ende der Gewindestange 7b mit ihrem Außengewinde eingeschraubt ist. Um die Gewindestange 7b in dem Gewindehülsenabschnitt 7d zu sichern, ist in der Wand des Gewindehülsenabschnitts 7d eine Öffnung 10 angeordnet, in die ein Stiftteil 9c des oberen Sicherungselementes 9b einsteckbar ist. Die Öffnung 10 geht durch die Wand der Gewindehülse 7d hindurch, so dass das Stiftteil 9c des oberen Sicherungselementes 9b auf den Außenumfang der Gewindestange 7b auftrifft. Des Weiteren weist die Gewindestange 7b eine in deren Längsrichtung L verlaufende Nut 11 auf, in die das Stiftteil 9c des oberen Sicherungselementes einsteckbar ist. Hierdurch wird wirksam eine Verdrehung der Gewindestange 7b und des oberen Verbindungsteils 7c gegeneinander verhindert.

Des Weiteren ist ersichtlich, dass der Stiftteil 9c in für einen Doppelfederstecker üblicher Ausbildung in einen zwei symmetrisch zueinander angeordnete Wendelbereiche 9d übergeht, der hier zur Erhöhung der Federkraft als Doppelwendel mit zwei Wicklungen ausgebildet ist. Jeder der beiden Wendelbereiche 9d geht ausgehend von dem Stiftteil 9c gesehen in einen Schenkel 9e über, der sich im Einbauzustand des oberen Sicherungselementes 9b an die Mantelfläche 7f der zylinderförmig ausgebildeten Gewindehülsenabschnitts 7d von außen anlegt. Von dem Wendelbereich 9d aus gesehen geht jeder der Schenkel 9e in einen Krümmungsbereich 9f über, in welchem der Krümmungsbereich 9f der Mantelfläche 7f des Gewindehülsenabschnitts 7d folgt und demnach nach innen gekrümmt ist. Da der Krümmungsbereich 9f an der Mantelfläche 7f des Gewindehülsenabschnitts 7d im Bereich von etwa einem Achtel des Umfangs des Gewindehülsenabschnitts 7d anliegt und aus Richtung des Stiftteils 9e gesehen den Gewindehülsenabschnitt 7d federnd hinter greift und bilden die beiden Krümmungsbereiche 9f ein Widerlager für den in dessen Längsrichtung in die Öffnung 10 und die Nut 11 und somit in radialer Richtung der Gewindestange 7b eingesteckte Stiftteil 9c. Hierbei verlaufenden die Längserstreckungen des Stiftteiles 9c und der Schenkel 9e im Wesentlichen parallel und voneinander beabstandet. Auch ist aus der Figur 3 ersichtlich, dass das Stiftteil 9c insgesamt U-förmig ausgebildet ist, da sich je nach Art des Doppel-Federsteckers zwei Wendelbereiche 9d anschließen.

Die vorstehende Beschreibung gilt auch für das identisch ausgebildete untere Verbindungsteil 7a und das zugehörige untere Sicherungselement 9a.

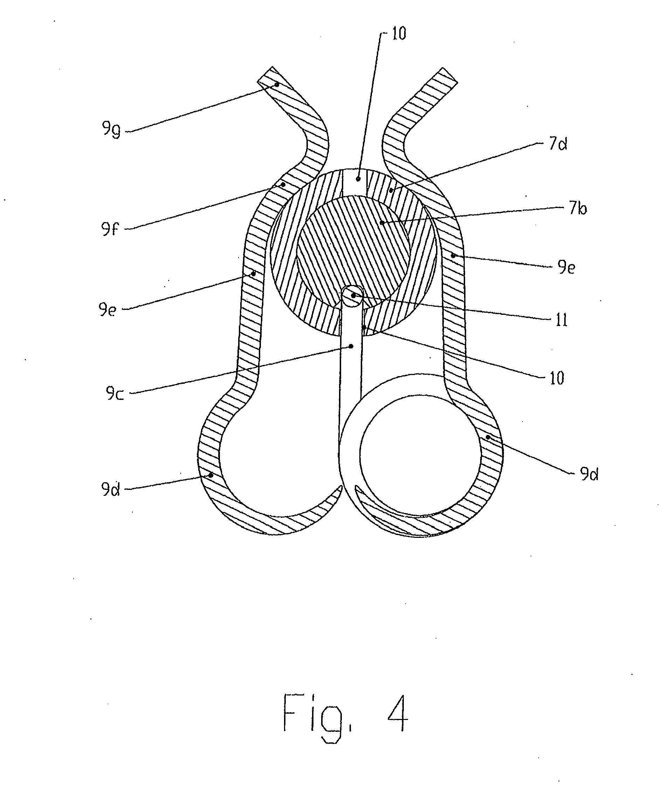

In der Figur 4 ist eine Schnittansicht von Figur 3 aus dem Bereich der Gewindehülse 7d bei gleichzeitig eingeschraubter Gewindestange 7b dargestellt. Es ist ersichtlich, dass der Stiftteil 9c durch die Öffnung 10 in dem Gewindehülsenabschnitt 7d in die Nut 11 in der Gewindestange 7b hineinragt. In der Gewindestange 7b ist nur eine einzige Nut 11 vorgesehen. Grundsätzlich wäre es möglich, auch mehrere Nuten vorzusehen, um eine feinere Einstellung der Länge des Zugelementes 7 zu erreichen. Die Praxis hat jedoch gezeigt, dass eine Nut 11 ausreichend ist, da hiermit bereits Längeneinstellungen des Zugelements 7 im Millimeter-Bereich möglich sind. Auch zeigt die Figur 4, dass die Schenkel 9e des oberen Sicherungselementes 9b in einem Krümmungsbereich 9f der Kontur der Mantelfläche 7f des Gewindehülsenabschnitts 7d folgen. Diesem Krümmungsbereich 9f schließt sich dann ein etwa 90°-Bogen nach außen an, der in einen Öffnungsbereich 9g mündet. Über diese beiden gegenläufigen Öffnungsbereiche 9g ist es einfacher, das Sicherungselement entgegen der Federkraft der Wendelbereiche 9d auf den Gewindehülsenabschnitt 7d aufzustecken.

Auch ist das Sicherungselement 9 so dimensioniert, dass es auf den Gewindehülsenabschnitt 7d seitlich aufgesteckt werden kann und hierbei dann das Stiftteil 9c bereits in die Öffnung 10 hinein ragt aber noch nicht in die Nut 11, da diese noch nicht in Deckung mit der Öffnung 10 steht. Bei einem Drehen der Gewindestange 7b relativ zu dem Gewindehülsenabschnitt 7d kommt es dann bei einem Fluchten der Nut 11 mit der Öffnung 10 zu einem selbsttätigen Reingleiten des Stiftteils 9c in die Nut 11 bedingt durch die Federkraft des Sicherungselements 9. Dies ist bei der Montage von großem Vorteil und erspart Montagezeit.

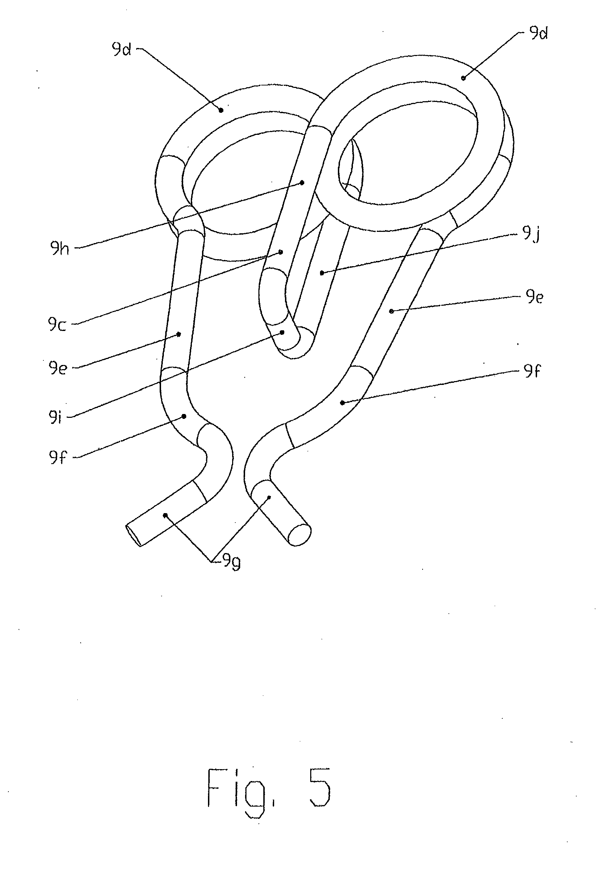

Die Figur 5 zeigt eine perspektivische Ansicht eines unteren oder oberen Sicherungselementes 9a, 9b. Aus dieser Ansicht ist besonders gut, die u-förmige Ausbildung des Stiftteiles 9c zu erkennen. Entsprechender Weise ist die Öffnung 10 in der Gewindehülse 7d nicht als kreisrunde Bohrung, sondern als Langloch ausgebildet. Der u-förmige Bereich des Stiftteiles 9c weist somit einen im Einbauzustand im Grund der Nut 11 ruhenden Stegteil 9i und sich jeweils gegenüberliegende und hieran anschließende untere und obere Stegschenkel 9h und 9j auf, die im Wesentlichen parallel zueinander verlaufen.

Grundsätzlich ist es auch möglich, die Öffnung 10 an den der Gewindestange 7b zugewandten Rand angrenzt und somit nur die Form einer in Richtung der Gewindestange 7b offenen Aussparung hat.

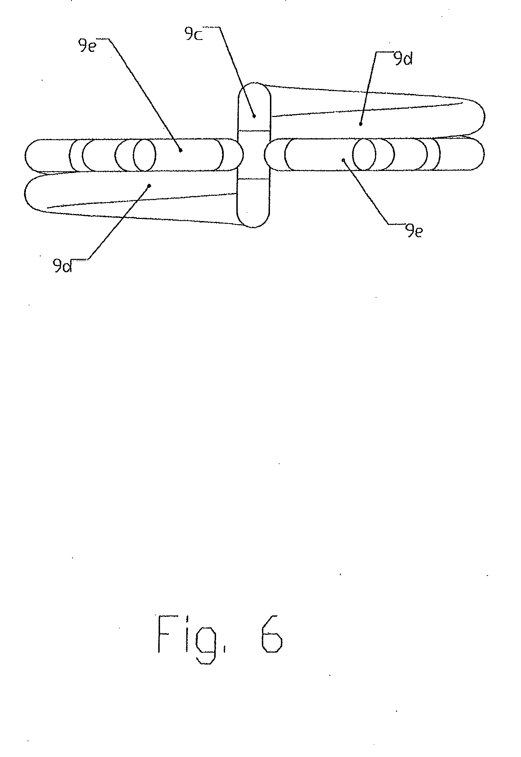

Die Figur 6 zeigt eine Ansicht von Figur 5 in Richtung des freien Endes des Stiftteiles 9c. Hieraus ist besonders gut ersichtlich, dass die doppelten Wendelbereiche 9d ausgehend von dem U-förmigen Stiftteil 9c von oben bzw. unten nach innen und aufeinander zu gewendelt werden, so dass trotz der doppelten Wendelbereiche 9d die in Bezug auf die Gewindehülsenabschnitt 7d gegenüberliegenden Schenkel 9e in einer Ebene liegen und somit das Stiftteil 9e sicher in der Öffnung 10 und der Nut 11 gehalten wird. Auch ist zu erkennen, dass gegenüber einem handelsüblichen Doppelfederstecker das Stiftteil 9c kürzer ausgebildet ist, da es nur in eine Nut 11 eingesteckt wird und nicht durch die sonst übliche Durchgangsbohrung in der Gewindestange hindurch gesteckt werden muss.

In diesem Ausführungsbeispiel ist die Aufhängevorrichtung 1 in Verbindung mit einem Einträgerhängekran beschrieben. Diese neue Aufhängevorrichtung 1 ist selbstverständlich auch zur Aufhängung von Schienen 2, 2a, 2b von Zweiträgerhängekranen und Einschienenbahnen sowie von Schienen 2, 2a, 2b, an denen Fahrwerke von flurfreien Förderern oder Hebezeugen verfahrbar sind, geeignet. Auch ist das Sicherungselement als Doppelfederstecker beschrieben. Es ist durchaus möglich, diesen auch als Einfachfederstecker auszubilden. Die Gewindestange 7b weist in üblicher Weise über seine gesamte Länge ein Außengewinde aus. Es ist auch denkbar, dass die Gewindestange 7b nur an ihren gegenüberliegenden Endbereichen ein Außengewinde aufweist. Grundsätzlich ist es auch denkbar neben der einzigen Nut 11 gegenüberliegende eine zweite Nut 11 vorzusehen. Auch gleich über den Umfang verteile dritte und vierte Nuten sind denkbar. Eine Erhöhung der Anzahl der Nuten 11 geht mit einer feinstufigeren Einstellung der effektiven Länge der Gewindestange 7b einher.

### Bezugszeichenliste

- 1: Aufhängevorrichtung
- 2: Schiene
- 2a: erste Schienen
- 2b: zweite Schienen
- 2c: Steg
- 3: Tragelement
- 4: Hebezeug
- 5: Hängeschalter
- 6: unteres Anschlussteil
- 7: Zugelement
- 7a: unteres Verbindungsteil
- 7b: Gewindestange
- 7c: oberes Verbindungsteil
- 7d: Gewindehülsenabschnitt
- 7e: Halbkugelkopfteil
- 7f: Mantelfläche
- 8: oberes Anschlussteil
- 9a: unteres Sicherungselement
- 9b: oberes Sicherungselement
- 9c: Stiftteil
- 9d: Wendelbereich
- 9e: Schenkel
- 9f: Krümmungsbereich
- 9g: Öffnungsbereich
- 9h: unterer Stiftschenkel
- 9i: Stiftsteg
- 9h: oberer Stiftschenkel
- 10: Öffnung
- 11: Nut

- L: Längsrichtung
- Z: Vergrößerungsbereich

## Patentansprüche

1. Aufhängevorrichtung (1) für eine Schiene (2), insbesondere eine Schiene (2) eines flurfreien Förderers oder eines Hebezeugs (4), mit einem eine Gewindestange (7b) und mindestens ein hiermit verschraubtes Verbindungsteil (7a, 7c) umfassenden Zugelement (7) und einem die Schraubverbindung zwischen der Gewindestange (7b) und dem Verbindungsteil (7a, 7c) gegen Lösen sichernden Sicherungselement (9a, 9b), **dadurch gekennzeichnet, dass** das Sicherungselement (9a, 9b) im Einbauzustand mit einem Stiftteil (9c) in eine Nut (11) eingreift, die in der Gewindestange (7b) angeordnet ist.

2. Aufhängevorrichtung nach Anspruch 1, **dadurch gekennzeichnet, dass** das Sicherungselement (9a, 9b) im Einbauzustand durch eine Öffnung (10) in dem Verbindungsteil (7a, 7c) mit dem Stiftteil (9c) in die Nut (11) eingreift.

3. Aufhängevorrichtung nach Anspruch 1 oder 2, **dadurch gekennzeichnet, dass** die Nut (11) in Längsrichtung (L) der Gewindestange (7b) verläuft.

4. Aufhängevorrichtung nach Anspruch 3, **dadurch gekennzeichnet, dass** die Nut (11) in Längsrichtung (L) der gesamten Gewindestange (7b) verläuft.

5. Aufhängevorrichtung nach einem der Ansprüche 1 bis 3, **dadurch gekennzeichnet, dass** das Sicherungselement (9a, 9b) nach Art eines Doppelfedersteckers mit zwei gegenüberliegenden Schenkeln (9e) ausgebildet ist.

6. Aufhängevorrichtung nach Anspruch 5, **dadurch gekennzeichnet, dass** im Einbauzustand des Sicherungselements (9a, 9b) die Schenkel (9e) das hülsenförmige Verbindungsteil (7a, 7c) aus Richtung des Stiftteils (9c) gesehen hintergreifen.

7. Aufhängevorrichtung nach einem der Ansprüche 1 bis 6, **dadurch gekennzeichnet, dass** die Öffnung (10) als Langloch ausgebildet ist, dessen Längserstreckung in Längsrichtung (L) der Gewindestange (7b) ausgerichtet ist, und das Stiftteil (9c) quer zu dessen Einsteckrichtung gesehen und quer zur Längsrichtung (L) der Gewindestange (7b) gesehen u-förmig ausgebildet ist.

8. Aufhängevorrichtung nach einem der Ansprüche 1 bis 7, **dadurch gekennzeichnet, dass** das Zugelement (7) neben der Gewindestange (7b) ein unteres Verbindungsteil (7a) und ein oberes Verbindungsteil (7c) umfasst.

9. Aufhängevorrichtung nach Anspruch 8, **dadurch gekennzeichnet, dass** im Einbauzustand an dem unteren Verbindungsteil (7a) die Schiene (2) aufgehängt ist und das obere Verbindungsteil (7c) an einem Tragelement (3) befestigt ist.

## Claims

1. Suspension device (1) for a rail (2), and in particular for a rail (2) of an overhead conveyor or a lifting apparatus (4), having a traction member (7) comprising a threaded rod (7b) and at least one connecting part (7a, 7c) screwed thereto, and having a securing member (9a, 9b) which secures the screwed connection between the threaded rod (7b) and the connecting part (7a, 7c) against coming loose, **characterised in that**, in the installed state, the securing member (9a, 9b) engages, by a spigot part (9c), in a groove (11) which is arranged in the threaded rod (7b).

2. Suspension device according to claim 1, **characterised in that**, in the installed state, the securing member (9a, 9b) engages in the groove (11), by the spigot part (9c), through an opening (10) in the connecting part (7a, 7c).

3. Suspension device according to claim 1 or 2, **characterised in that** the groove (11) extends in the longitudinal direction (L) of the threaded rod (7b).

4. Suspension device according to claim 3, **characterised in that** the groove (11) extends in the longitudinal direction (L) of the whole of the threaded rod (7b).

5. Suspension device according to one of claims 1 to 3, **characterised in that** the securing member (9a, 9b) is formed after the fashion of a double R-clip having two side-limbs (9e) on opposite sides.

6. Suspension device according to claim 5, **characterised in that**, when the securing member (9a, 9b) is in the installed state, the side-limbs (9e) fit behind the sleeve-like connecting part (7a, 7c) when seen from the direction of the spigot part (9c).

7. Suspension device according to one of claims 1 to 6, **characterised in that** the opening (10) is in form of a slotted hole whose longitudinal extent is aligned in the longitudinal direction (L) of the threaded rod (7b), and the spigot part (9c) is U-shaped when seen transversely to the direction in which it is inserted and transversely to the longitudinal direction (L) of the threaded rod (7b).

8. Suspension device according to one of claims 1 to 7, **characterised in that**, as well as the threaded rod (7b), the traction member (7) also comprises a lower connecting part (7a) and an upper connecting part (7c).

9. Suspension device according to claim 8, **characterised in that**, in the installed state, the rail (2) is suspended from the lower connecting part (7a) and the upper connecting part (7c) is fastened to a carrying member (3).

## Revendications

1. Dispositif de suspension (1) destinée à un rail (2), en particulier un rail (2) d'un transporteur aérien ou d'un engin de levage (4), ledit dispositif comportant un élément de traction (7), qui comprend une tige filetée (7b) et au moins une pièce de liaison (7a, 7c) vissée sur celle-ci, et un élément de sécurité (9a, 9b) assurant la liaison par vissage entre la tige filetée (7b) et la pièce de liaison (7a, 7c) en empêchant le desserrage, **caractérisé en ce que**, une fois monté, l'élément de sécurité (9a, 9b) s'engage par une pièce rigide (9c) dans un écrou (11) qui est disposé dans la tige filetée (7b).

2. Dispositif de suspension selon la revendication 1, **caractérisé en ce que**, une fois monté, l'élément de sécurité (9a, 9b) s'engage par la partie rigide (9c) dans l'écrou (11) en passant à travers une ouverture (10) ménagée dans la pièce de liaison (7a, 7c).

3. Dispositif de suspension selon la revendication 1 ou 2, **caractérisé en ce que** l'écrou (11) s'étend dans la direction longitudinale (L) de la tige filetée (7b).

4. Dispositif de suspension selon la revendication 3, **caractérisé en ce que** l'écrou (11) s'étend dans la direction longitudinale (L) de toute la tige filetée (7b).

5. Dispositif de suspension selon l'une des revendications 1 à 3, **caractérisé en ce que** l'élément de sécurité (9a, 9b) est conformé à la manière d'un double connecteur élastique doté de deux branches opposées (9e).

6. Dispositif de suspension selon la revendication 5, **caractérisé en ce que**, une fois l'élément de sécurité (9a, 9b) monté, les branches (9e) s'engagent en arrière de la pièce de liaison (7a, 7c) en forme de manchon lorsque l'on regarde depuis la direction de la partie rigide (9c).

7. Dispositif de suspension selon l'une des revendications 1 à 6, **caractérisé en ce que** l'ouverture (10) est conformée en trou oblong dont l'extension longitudinale est orientée dans la direction longitudinale (L) de la tige filetée (7b), et la partie rigide (9c) est conformée en U lorsque l'on regarde transversalement à la direction d'insertion de ladite partie rigide et transversalement la direction longitudinale (L) de la tige filetée (7b).

8. Dispositif de suspension selon l'une des revendications 1 à 7, **caractérisé en ce que** l'élément de traction (7) comporte outre la tige filetée (7b) une pièce de liaison inférieure (7a) et une pièce de liaison supérieure (7c).

9. Dispositif de suspension selon la revendication 8, **caractérisé en ce que**, une fois monté, le rail (2) est suspendu à la pièce de liaison inférieure (7a) et la pièce de liaison supérieure (7c) est fixée à un élément de support (3).
